# EUROPEAN PATENT APPLICATION

(11) **EP 4 059 639 A1**
(43) Date of publication of application: **21.09.2022**
(21) Application number: 22158455.0
(22) Date of filing: 24.02.2022
(51) Int. Cl.: B22F 10/28, B22F 10/366, B22F 10/368, B33Y 10/00, B33Y 30/00, B33Y 50/02

(54) **THREE-DIMENSIONAL POWDER BED FUSION ADDITIVE MANUFACTURING APPARATUS AND THREE-DIMENSIONAL POWDER BED FUSION ADDITIVE MANUFACTURING METHOD**

(30) Priority: 19.03.2021 JP 2021045456
(71) Applicant: Jeol Ltd., Akishima-shi, Tokyo 196-8558 (JP)
(72) Inventor: KAWAKAMI, Masahiko, Tokyo, 196-8558 (JP); EN, Shio, Tokyo, 196-8558 (JP); MIYAKITA, Ayumu, Tokyo, 196-8558 (JP); KANEKO, Yuhei, Tokyo, 196-8558 (JP)
(74) Representative: Boult Wade Tennant LLP

(57) **Abstract**

Provided is a technique capable of preventing metal to be melted in one line from being affected by heat at the time of performing beam scanning on the next line.

A three-dimensional PBF-AM apparatus (10) includes: a build plate (22) on which a powder material (32) is spread in layers; and a beam irradiation device (14) which irradiates the powder material (32) spread on the build plate (22) with a beam (15). The beam irradiation device (14) divides a build region (39) of the powder material (32) spread on the build plate (22) into a plurality of lines and performs beam scanning to melt the powder material (32) in the build region (39) line by line, and performs dummy scanning to scan the beam (15) in a state that does not cause melting of the powder material (32) between an end of beam scanning of an M-th (M is a natural number) line and a start of beam scanning of an (M + 1)th line.

## Description

### BACKGROUND

### Technical Field

The present invention relates to a three-dimensional powder bed fusion additive manufacturing (PBF-AM) apparatus and a three-dimensional PBF-AM method.

### Related Art

In recent years, there is known a three-dimensional PBF-AM apparatus that irradiates a powder material spread in layers on a build plate with a beam to melt and coagulate the powder material, and laminates the coagulated layers sequentially by moving the build plate to form a three-dimensionally shaped object (see, for example, Patent Literature 1).

### Citation List

### Patent Literature

Patent Literature 1: JP 2015-193135 A

### SUMMARY

When the powder material is melted by the three-dimensional PBF-AM apparatus, a build region of the powder material is divided into a plurality of lines, and each of the lines is sequentially subjected to beam scanning to melt the powder material line by line. The beam scanning means scanning with the beam. At this time, if the beam scanning is performed on an (M + 1)th line after the beam scanning is performed on an M-th line, a melt pool formed by metal melted in the M-th line is disturbed by being affected by heat at the time of performing the beam scanning on the (M + 1)th line, so that and a defect is likely to be generated in the shaped object. In particular, in a case where a length (hereinafter, also referred to as "line length") of a line to be subjected to the beam scanning is short, a time interval from a start of the beam scanning of the M-th line to a start of the beam scanning of the (M + 1)th line is shortened, so that the line is easily affected by heat of the next line.

The present invention has been made to solve the above problems, and it would be desirable to provide a technique capable of preventing metal to be melted in one line from being affected by heat at the time of performing beam scanning on the next line when a powder material is melted by beam scanning.

A three-dimensional PBF-AM apparatus according to the present invention includes: a build plate on which a powder material is spread in layers; and a beam irradiation device which irradiates the powder material spread on the build plate with a beam. The beam irradiation device divides a build region of the powder material spread on the build plate into a plurality of lines and performs beam scanning to melt the powder material in the build region line by line, and performs dummy scanning to scan the beam in a state that does not cause melting of the powder material between an end of beam scanning of an M-th (M is a natural number) line and a start of beam scanning of an (M + 1)th line.

A three-dimensional PBF-AM method according to the present invention includes: a step of spreading a powder material on a build plate; and a step of melting and coagulating the powder material by irradiating the powder material with a beam and dividing a build region corresponding to a cross-sectional shape of a shaped object into a plurality of lines to perform beam scanning. In the step of melting and coagulating the powder material, dummy scanning is performed to scan the beam in a state that does not cause melting of the powder material between an end of beam scanning of an M-th (M is a natural number) line and a start of beam scanning of an (M + 1)th line.

According to the present invention, when the powder material is melted by the beam scanning, it is possible to prevent the metal to be melted in one line from being affected by the heat at the time of performing the beam scanning on the next line.

### BRIEF DESCRIPTION OF DRAWINGS

FIG. 1 is a side view schematically illustrating a configuration of a three-dimensional PBF-AM apparatus according to a first embodiment of the present invention;
FIG. 2 is a flowchart illustrating a procedure of a basic operation of the three-dimensional PBF-AM apparatus according to the first embodiment of the present invention;
FIG. 3 is a flowchart illustrating a processing procedure when a data processing device creates PBF-AM data in the first embodiment of the present invention;
FIG. 4 is a schematic view illustrating a state in which a build region is decomposed into a plurality of melting points;
FIG. 5 is a view illustrating a setting example (Part 1) of a threshold applied to determination whether dummy scanning is necessary;
FIG. 6 is a view illustrating the setting example (Part 2) of the threshold applied to the determination whether the dummy scanning is necessary;
FIG. 7 is a flowchart illustrating a processing procedure when a control unit controls an electron beam based on the PBF-AM data;
FIG. 8 is a plan view schematically illustrating an example of a dummy scanning path;
FIG. 9 is a plan view schematically illustrating an example of a dummy scanning path according to a second embodiment of the present invention;
FIG. 10 is a flowchart illustrating a processing procedure when a data processing device creates PBF-AM data in a third embodiment of the present invention;
FIG. 11 is a view illustrating an example of table data for determining a beam scanning condition; and
FIG. 12 is a flowchart illustrating a processing procedure when a control unit controls an electron beam based on the PBF-AM data in the third embodiment of the present invention.

### DETAILED DESCRIPTION

Hereinafter, embodiments of the present invention will be described in detail with reference to the drawings. In the present specification and drawings, elements having substantially the same function or configuration are denoted by the same reference sign, and the redundant description thereof is omitted.

### <First Embodiment>

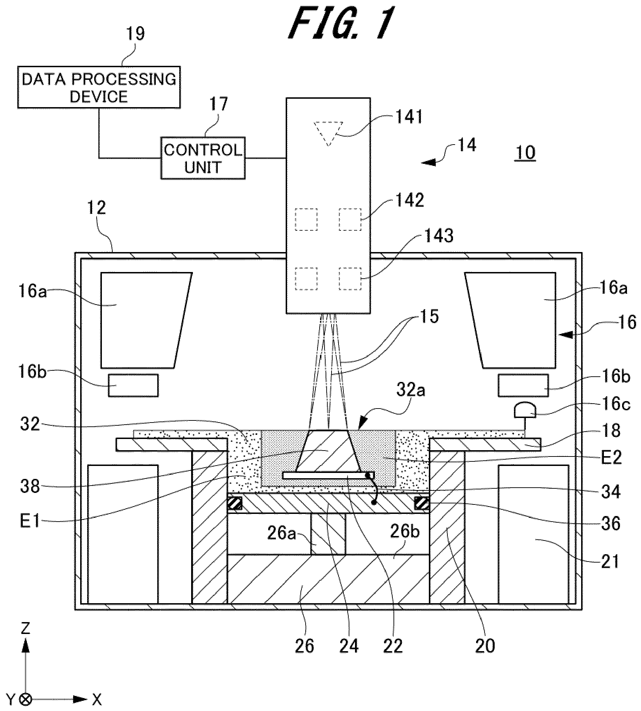

FIG. 1 is a side view schematically illustrating a configuration of a three-dimensional PBF-AM apparatus according to a first embodiment of the present invention. In the following description, in order to clarify a shape and a positional relationship of each part of the three-dimensional PBF-AM apparatus, a left-right direction in FIG. 1 is defined as an X direction, a depth direction in FIG. 1 is defined as a Y direction, and an up-down direction in FIG. 1 is defined as a Z direction. The X, Y, and Z directions are directions orthogonal to each other. Further, the X and Y directions are directions parallel to a horizontal direction, and the Z direction is a direction parallel to a vertical direction.

As illustrated in FIG. 1, the three-dimensional PBF-AM apparatus 10 includes a vacuum chamber 12, a beam irradiation device 14, powder supply devices 16, a build table 18, a build box 20, collection boxes 21, a build plate 22, an inner base 24, and a plate movement device 26.

The vacuum chamber 12 is a chamber configured to create a vacuum state by evacuating air in the chamber by a vacuum pump (not illustrated).

The beam irradiation device 14 is a device that irradiates an object with a beam. In the present embodiment, the beam irradiation device 14 emits an electron beam, which is one of charged particle beams, as an example of the beam. The beam irradiation device 14 includes: an electron gun 141 that is a generation source of electron beams 15; a condenser lens 142 that focuses the electron beams 15 generated by the electron gun 141; a deflector lens 143 that deflects the electron beam 15 focused by the condenser lens 142; and a control unit 17.

The condenser lens 142 is configured using a focusing coil, and the electron beam 15 is focused by a magnetic field generated by the focusing coil. Further, the deflector lens 143 is configured using a deflecting coil, and deflects the electron beam 15 by a magnetic field generated by the deflecting coil. The control unit 17 controls the electron beam 15 via the electron gun 141, the condenser lens 142, and the deflector lens 143. For example, the control unit 17 controls a beam current of the electron beam 15 via the electron gun 141. Further, the control unit 17 controls a focus state of the electron beam 15 via the condenser lens 142. Further, the control unit 17 controls a deflection angle and a deflection speed of the electron beam 15 via the deflector lens 143.

Note that a spot diameter of the electron beam 15 in a horizontal plane (XY plane) changes according to the focus state of the electron beam 15. Thus, controlling the focus state of the electron beam 15 means controlling the spot diameter of the electron beam 15 emitted to the object. Further, an irradiation position of the electron beam 15 in the horizontal plane changes according to the deflection angle of the electron beam 15. Thus, controlling the deflection angle of the electron beam 15 means controlling the irradiation position of the electron beam 15. Further, a speed at which a spot of the electron beam 15 moves in the horizontal plane, that is, a scanning speed of the beam changes according to the deflection speed of the electron beam 15. Thus, controlling the deflection speed of the electron beam 15 means controlling the scanning speed of the electron beam 15.

The control unit 17 is connected to the data processing device 19 to be capable of communicating with each other. The data processing device 19 creates PBF-AM data based on three-dimensional computer-aided design (CAD) data, which is design data of a target shaped object, and transfers the PBF-AM data to the control unit 17. The PBF-AM data is data including various parameters required to drive the electron gun 141, the condenser lens 142, and the deflector lens 143 to control the electron beam 15. The data processing device 19 may be one of elements constituting the beam irradiation device 14, or may be an element independent of the beam irradiation device 14. Further, a function of the data processing device 19 may be incorporated into the control unit 17.

The powder supply device 16 is a device that supplies metal powder 32 onto the build table 18 as an example of a powder material that is a raw material of a shaped object 38. The powder supply device 16 includes a hopper 16a, a powder dropper 16b, and a squeegee arm 16c. The hopper 16a is a chamber configured to store the metal powder. The powder dropper 16b is a device that drops the metal powder stored in the hopper 16a onto the build table 18. The squeegee arm 16c is a long member that is long in the Y direction. The squeegee arm 16c spreads the metal powder dropped by the powder dropper 16b on the build table 18. The squeegee arm 16c is provided to be movable in the X direction in order to spread the metal powder on the entire surface of the build table 18.

The build table 18 is horizontally arranged inside the vacuum chamber 12. The build table 18 is arranged below the powder supply device 16. The central part of the build table 18 is open. An opening shape of the build table 18 is a circular in a plan view or a polygon in a plan view (for example, a quadrangle in a plan view).

The build box 20 is a box that forms a space for manufacturing. An upper end of the build box 20 is connected to an opening edge of the build table 18. A lower end of the build box 20 is connected to a bottom wall of the vacuum chamber 12.

The collection box 21 is a box that collects the metal powder 32 supplied more than necessary out of the metal powder 32 supplied on the build table 18 by the powder supply device 16. The collection boxes 21 are provided on one side and the other side in the X direction, respectively.

The build plate 22 is a plate for forming the shaped object 38 using the metal powder 32. The shaped object 38 is laminated and molded on the build plate 22. The build plate 22 is formed in a circular shape in a plan view or a polygonal shape in a plan view in accordance with the opening shape of the build table 18. The build plate 22 is connected (grounded) to the inner base 24 by a grounding line 34 so as not to be in an electrically floating state. The inner base 24 is held at a ground (GND) potential. The metal powder 32 is spread on the build plate 22 and the inner base 24.

The inner base 24 is provided to be movable in the up-down direction (Z direction). The build plate 22 moves in the up-down direction integrally with the inner base 24. The inner base 24 has a larger external dimension than the build plate 22. The inner base 24 slides in the up-down direction along an inner side surface of the build box 20. A seal member 36 is attached to an outer peripheral portion of the inner base 24. The seal member 36 is a member that maintains slidability and airtightness between the outer peripheral portion of the inner base 24 and the inner side surface of the build box 20. The seal member 36 is made of a material having heat resistance and elasticity.

The plate movement device 26 is a device that moves the build plate 22 and the inner base 24 in the up-down direction. The plate movement device 26 includes a shaft 26a and a drive mechanism 26b. The shaft 26a is connected to a lower surface of the inner base 24. The drive mechanism 26b includes a motor and a power transmission mechanism (not illustrated), and drives the power transmission mechanism using the motor as a drive source to move the build plate 22 and the inner base 24 in the up-down direction integrally with the shaft 26a. The power transmission mechanism is configured using, for example, a rack and pinion mechanism, a ball screw mechanism, or the like.

### <Basic Operation of Three-Dimensional PBF-AM Apparatus>

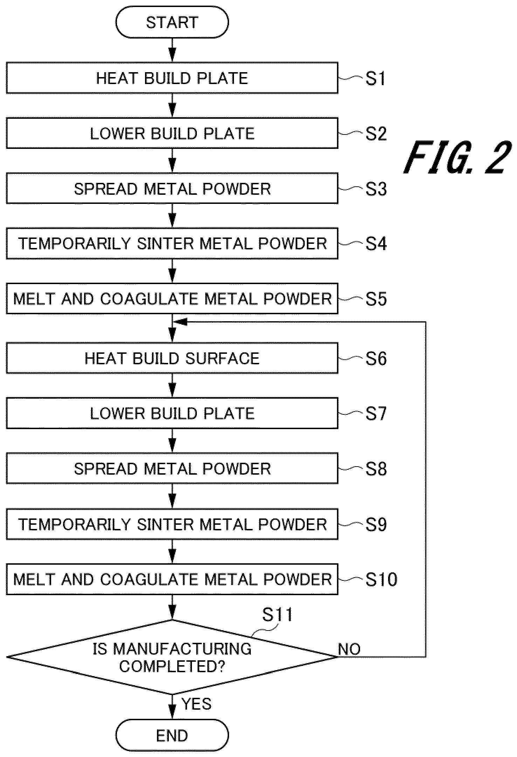

Subsequently, a basic operation of the three-dimensional PBF-AM apparatus 10 according to the first embodiment of the present invention will be described with reference to a flowchart of FIG. 2.

Before starting manufacturing, three sides of the build plate 22 are covered with the metal powder 32 except for an upper surface of the build plate 22. Further, the upper surface of the build plate 22 is arranged at substantially the same height as an upper surface of the metal powder 32 spread on the build table 18.

First, the build plate 22 is heated (step S1).

In step S1, the beam irradiation device 14 operates under the control of the control unit 17 to irradiate the build plate 22 with the electron beam 15. As a result, the build plate 22 is heated by irradiation with the electron beam 15. Further, the build plate 22 is heated to a temperature at which the metal powder 32 is temporarily sintered.

Next, the build plate 22 is lowered by a predetermined amount (step S2).

In step S2, the plate movement device 26 lowers the inner base 24 by a predetermined amount such that the upper surface of the build plate 22 is slightly lower than the upper surface of the metal powder 32 spread on the build table 18. At this time, the build plate 22 is lowered by the predetermined amount together with the inner base 24. The predetermined amount described here (hereinafter, also referred to as "ΔZ") corresponds to a thickness of one layer when the shaped object 38 is manufactured by lamination.

Next, the metal powder 32 is spread on the build plate 22 (step S3).

In step S3, the powder supply device 16 drops the metal powder 32, which has been supplied from the hopper 16a to the powder dropper 16b, onto the build table 18 by the powder dropper 16b, and then, moves the squeegee arm 16c from one end side to the other end side in the X direction to spread the metal powder 32 on the inner base 24. At this time, the metal powder 32 is spread on the build table 18 with a thickness corresponding to ΔZ. Further, the excess metal powder 32 is collected into the collection box 21.

Next, the metal powder 32 is temporarily sintered (step S4).

In step S4, the beam irradiation device 14 operates under the control of the control unit 17 to irradiate the metal powder 32 on the build plate 22 with the electron beam 15. Further, the control unit 17 controls the deflector lens 143 to scan the electron beam 15 in a wider range than a region (hereinafter, also referred to as "build region") for forming the shaped object 38. As a result, the metal powder 32 existing in the build region and the metal powder 32 existing around the build region are temporarily sintered.

In FIG. 1, reference sign E1 denotes an unsintered region in which the metal powder 32 that has not been sintered exists, and reference sign E2 denotes a temporarily sintered region in which the temporarily sintered metal powder 32 exists.

Next, the metal powder 32 is melted and coagulated (step S5).

In step S5, the metal powder 32 as a temporarily sintered body is subjected to sintering by melting and coagulating the metal powder 32 temporarily sintered as described above by irradiation with the electron beam 15. In step S5, the beam irradiation device 14 identifies the build region based on two-dimensional data obtained by slicing three-dimensional CAD data of the target shaped object 38 to a constant thickness (thickness corresponding to ΔZ), and scanning the electron beam 15 (hereinafter, also referred to as "beam scanning") with respect to this build region, thereby selectively melting the metal powder 32 on the build plate 22. The metal powder 32 melted by the irradiation of the electron beam 15 coagulates after the electron beam 15 passes therethrough. As a result, building of the first layer is completed.

Note that the shaped object 38 illustrated in FIG. 1 is obtained by melting and coagulating the temporarily sintered metal powder 32 in each layer by irradiation with the electron beam 15.

Next, a build surface 32a is heated in preparation for spreading the next layer of the metal powder 32 (step S6). The build surface 32a corresponds to an upper surface of the metal powder 32 after the above-described sintering (melting and coagulation of the metal powder 32) is ended.

In step S6, the beam irradiation device 14 operates under the control of the control unit 17 to irradiate the build surface 32a with the electron beam 15.

Next, the build plate 22 is lowered by the predetermined amount (ΔZ) (step S7).

In step S7, the plate movement device 26 lowers the inner base 24 by ΔZ such that the build surface 32a is slightly lower than an upper surface of the metal powder 32 spread on the build table 18.

Next, the metal powder 32 is spread on the build plate 22 (step S8).

In step S8, the powder supply device 16 operates in the same manner as in the above step S3.

Next, the metal powder 32 is temporarily sintered (step S9).

In step S9, the beam irradiation device 14 operates in the same manner as in the above step S4.

Next, the metal powder 32 is melted and coagulated (step S10).

In step S10, the beam irradiation device 14 operates in the same manner as in the above step S5. As a result, building of the second layer is completed.

Thereafter, the above steps S6 to S10 are repeated until manufacturing of the shaped object 38 is completed in step S11. The manufacturing of the shaped object 38 is completed when the metal powder 32 is melted and coagulated by the number of layers required for the manufacturing of the shaped object 38. As a result, the target shaped object 38 is obtained.

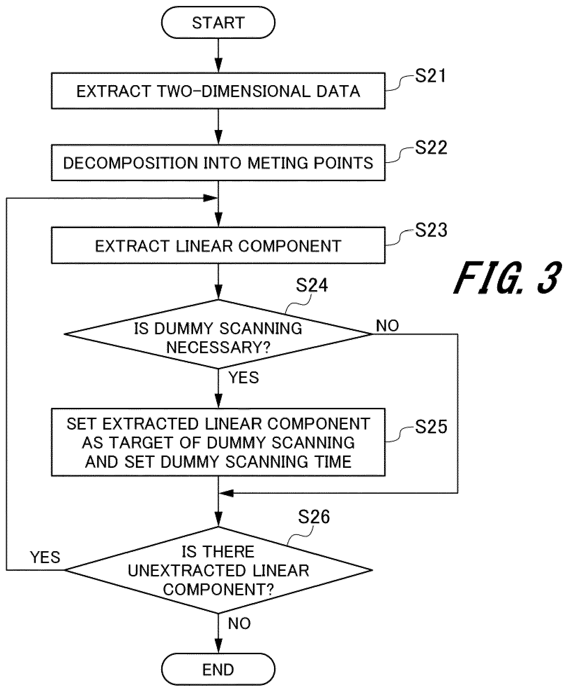

FIG. 3 is a flowchart illustrating a processing procedure when the data processing device 19 creates the PBF-AM data in the first embodiment of the present invention.

First, the data processing device 19 extracts the two-dimensional data obtained by slicing the three-dimensional CAD data of the shaped object 38 to a constant thickness for each layer (step S21). The two-dimensional data is data representing a cross-sectional shape of the shaped object 38. The three-dimensional CAD data of the shaped object 38 is given to the data processing device 19 before starting the processing illustrated in FIG. 3. The three-dimensional CAD data may be input to the data processing device 19 by a user who uses the three-dimensional PBF-AM apparatus 10, may be read from a nonvolatile storage device (not illustrated) by the data processing device 19, or may be acquired by the data processing device 19 through communication from a terminal device (not illustrated).

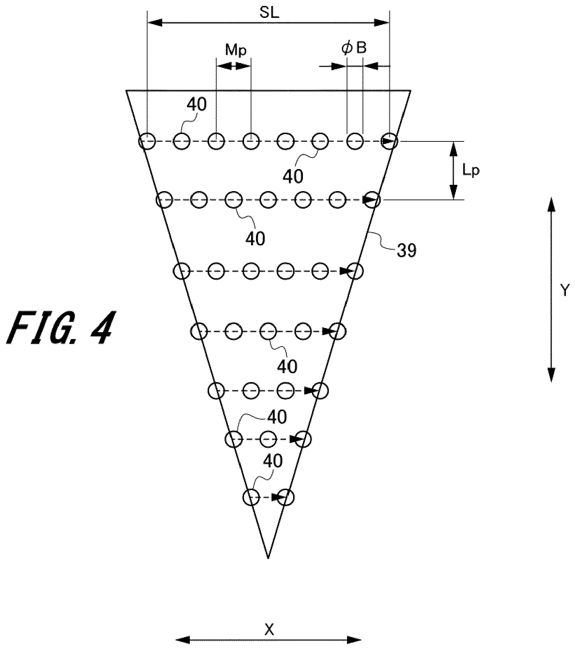

Next, the data processing device 19 decomposes the build region identified by the two-dimensional data into melting points (step S22). There may be a case where only one build region exists in each layer and a case where a plurality of build regions exist in each layer depending on shapes and the number of the target shaped objects 38. The melting point is a point irradiated with the electron beam 15 in order to melt the metal powder 32 in the above steps S5 and S10. For example, when a build region 39 of the target shaped object 38 is an inverted triangle as illustrated in FIG. 4, the build region 39 is decomposed into a plurality of melting points 40.

Next, the data processing device 19 extracts linear components from the plurality of melting points 40 (step S23). The linear component is extracted as a set of the melting points 40 arrayed at predetermined intervals in a scanning direction of the electron beam 15 when the build region 39 is melted by irradiation with the electron beam 15. FIG. 4 illustrates a case where the scanning direction of the electron beam 15 is the X direction as an example. The scanning direction of the electron beam 15 is a direction in which the irradiation position (spot position) of the electron beam 15 moves in each line of the build region 39. Further, assuming that the scanning with the electron beam 15 is performed line by line sequentially from top to the bottom of the build region 39 illustrated in FIG. 4 in the Y direction orthogonal to the X direction, the data processing device 19 extracts the linear components one by one sequentially from the top of FIG. 4. At that time, a linear component extracted for the first time by the data processing device 19 corresponds to the first line, a linear component extracted next corresponds to the second line, and a linear component extracted next corresponds to the third line. Since the linear components are extracted by the data processing device 19 in this manner, the single build region 39 is divided into a plurality of lines and processed. Further, assuming that the lowermost line of the build region 39 illustrated in FIG. 4 is the fiftieth line, the data processing device 19 extracts one linear component each time the process of step S23 is performed once, and extracts the linear components sequentially from the first line to the fiftieth line by repeating this process.

Next, the data processing device 19 compares a length of the linear component extracted in the above step S23, that is, a line length SL (see FIG. 4) with a threshold set in advance, and determines whether dummy scanning is necessary based on a result of the comparison (step S24). Specifically, the data processing device 19 determines that the dummy scanning is unnecessary when the line length is equal to or longer than the threshold, and determines that the dummy scanning is necessary when the line length is shorter than the threshold. The length of the line extracted by the data processing device 19 in step S23 varies depending on which position in the Y direction of FIG. 4 (which number) of the line is extracted as the linear component. For example, if the build region 39 is the inverted triangle as illustrated in FIG. 4, a length of an extracted linear component becomes shorter each time a position of the linear component extracted by the data processing device 19 is shifted downward. On the other hand, the threshold is set in consideration of the influence of heat between adjacent lines in the Y direction. The dummy scanning will be described in detail later.

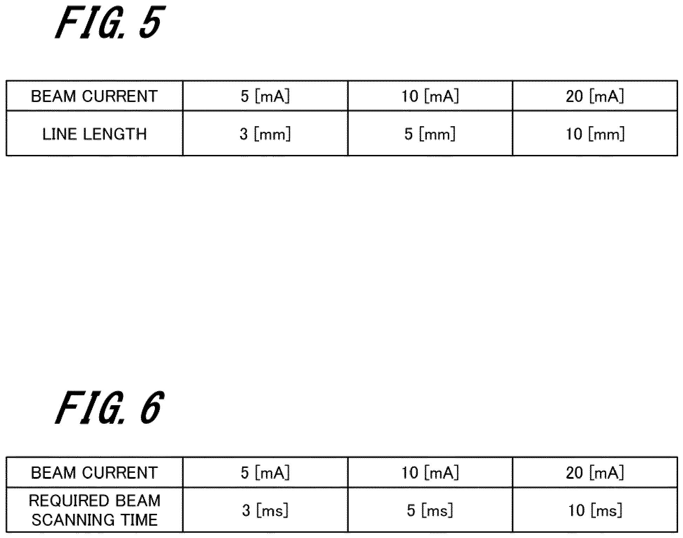

FIG. 5 is a view illustrating a setting example of the threshold applied to the determination whether the dummy scanning is necessary.

In FIG. 5, the threshold (hereinafter, also referred to as a "first threshold") to be compared with the line length, which is the length of the linear component, is set to a different value depending on a beam current of the electron beam 15. Specifically, a threshold applied when the beam current is 5 mA is set to 3 mm, a threshold applied when the beam current is 10 mA is set to 5 mm, and a threshold applied when the beam current is 20 mA is set to 10 mm. The beam current of the electron beam 15 emitted to the build region 39 is set in advance according to a material of the metal powder 32, a size or a shape of the shaped object 38, or the like. Then, assuming that the beam current of the electron beam 15 emitted to the build region 39 is set to 10 mA, the data processing device 19 applies the threshold = 5 mm in the above step S24 to determine whether the dummy scanning is necessary.

Note that the threshold applied to determine whether the dummy scanning is necessary is not limited to the threshold to be compared with the line length, but may be a threshold to be compared with a time required for beam scanning of a corresponding line (hereinafter, referred to as a "second threshold"). FIG. 6 illustrates a setting example of the threshold in that case.

In FIG. 6, the threshold to be compared with the time (hereinafter, also referred to as "required beam scanning time") required for beam scanning of the line extracted as the linear component in the above step S23 is set to a different value depending on the beam current of the electron beam 15. Specifically, a threshold applied when the beam current is 5 mA is set to 3 ms, a threshold applied when the beam current is 10 mA is set to 5 ms, and a threshold applied when the beam current is 20 mA is set to 10 ms.

When a scanning speed at the time of scanning each line with the electron beam 15 is constant, a proportional relationship is established between a length of one line and a time required for beam scanning of the line. Therefore, whether the dummy scanning is necessary may be determined based on either the length of the line or the required beam scanning time.

Further, when the beam current is more than 5 mA and less than 10 mA or when the beam current is more than 10 mA and less than 20 mA, the threshold to be applied to the determination on the necessity of the dummy scanning may be determined by an interpolation method or the like.

Returning to FIG. 3 again, the data processing device 19 proceeds to step S26 to be described later when determining that the dummy scanning is unnecessary in the above step S24. Further, when determining that dummy scanning is necessary in the above step S24, the data processing device 19 sets the linear component extracted in the previous step S23 as a target of the dummy scanning and sets a dummy scanning time (step S25). When the linear component extracted in step S23 is set as the target of the dummy scanning, drawing information for the dummy scanning is inserted after the linear component. As a result, in the actual three-dimensional PBF-AM processing, the process shifts to the dummy scanning at the time when the beam scanning of the linear component (line) set as the target of the dummy scanning has ended. The dummy scanning is performed according to a scanning path indicated by the drawing information. Further, the dummy scanning is performed until beam scanning of the next line is started. That is, the dummy scanning is performed between an end of beam scanning of an M-th line (M is a natural number) and a start of beam scanning of an (M + 1)th line.

The dummy scanning time set in the above step S25 is a time from a start to an end of the dummy scanning. The dummy scanning time is preferably set according to a difference between the threshold to be compared and the line length in the above step S24. For example, if the first threshold is 5 mm and the line length is 4 mm, it is preferable to set the dummy scanning time to be the same as or slightly longer than a time required for beam scanning of a length of 1 mm which is a difference therebetween. If the second threshold is 5 ms and the required beam scanning time described above is 3 ms, it is preferable to set the dummy scanning time to be the same as or slightly longer than 2 ms which is a difference therebetween. As a result, it is possible to appropriately set the dummy scanning time.

Next, the data processing device 19 confirms whether there remains an unextracted linear component (step S26). For example, when the shaped object 38 illustrated in FIG. 4 is processed by being divided into a total of 50 linear components (lines), the data processing device 19 confirms whether a currently extracted linear component in step S23 corresponds to the fiftieth line, that is, the final line. Then, when the currently extracted linear component does not correspond to the fiftieth line, the data processing device 19 determines that there remains an unextracted linear component, and returns to the above step S23. Further, when the currently extracted linear component corresponds to the fiftieth line, the data processing device 19 determines that the extraction of all the linear components has been ended, and ends a series of the processes.

Through the above processing, the data processing device 19 creates the PBF-AM data. Further, the data processing device 19 transfers the created PBF-AM data to the control unit 17.

On the other hand, the control unit 17 controls the operations of the respective parts (the electron gun 141, the condenser lens 142, the deflector lens 143, and the like) of the beam irradiation device 14 based on the PBF-AM data received from the data processing device 19. Further, the control unit 17 divides the build region 39 (see FIG. 4) identified in the above steps S5 and S10 into the plurality of lines based on the PBF-AM data and performs beam scanning to melt the metal powder 32 in the build region 39 line by line.

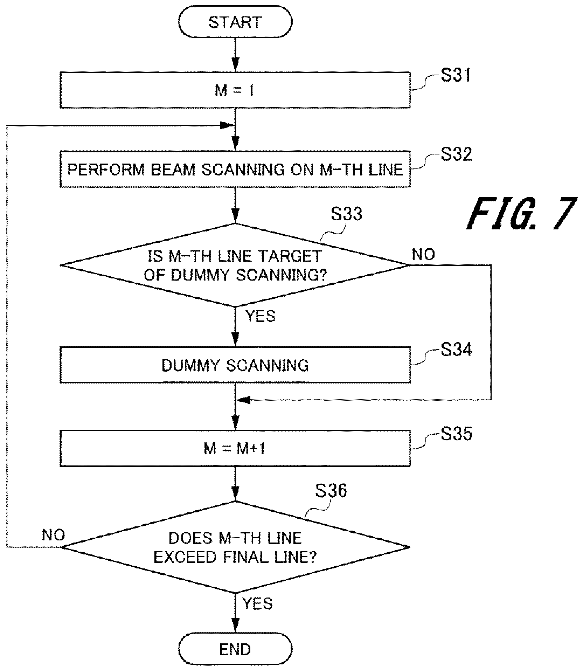

FIG. 7 is a flowchart illustrating a processing procedure when the control unit 17 controls the electron beam 15 based on the PBF-AM data.

First, the control unit 17 sets a value of a variable M to an initial value (M = 1) (step S31). Next, the control unit 17 performs the beam scanning on an M-th line (step S32). As a result, the control unit 17 performs beam scanning on the linear component extracted as the M-th line when the data processing device 19 creates the PBF-AM data.

Next, the control unit 17 confirms whether the M-th line (linear component) is set as a target of the dummy scanning (step S33). Then, when determining that the M-th line is set as the target of the dummy scanning, the control unit 17 performs the dummy scanning at the time when the beam scanning of the line has ended (step S34). At this time, the control unit 17 controls the operations of the respective parts (the electron gun 141, the condenser lens 142, the deflector lens 143, and the like) of the beam irradiation device 14 based on a condition set by the data processing device 19 in the above step S25, thereby adjusting the dummy scanning time. Further, the control unit 17 performs beam scanning in a state in which a spot diameter of the electron beam 15 is narrowed so as to melt the metal powder 32 at the time of performing the beam scanning on the M-th line, and then, performs beam scanning in a state in which the spot diameter of the electron beam 15 is widened so as not to melt the metal powder 32 at the time of performing the dummy scanning. Further, the control unit 17 scans performs the beam scanning at a low speed so as to melt the metal powder 32 at the time of performing the beam scanning on the M-th line, and then, performs the beam scanning at a high speed so as not to melt the metal powder 32 at the time of performing the dummy scanning.

As the condition for the dummy scanning, any condition may be applied as long as thermal energy to be applied to the metal powder 32 can be reduced to such an extent that the metal powder 32 does not melt. Further, both the focus state of the electron beam 15 and the scanning speed of the electron beam 15 are changed at the time of performing the dummy scanning in the present embodiment, but only one of them may be changed.

Next, the control unit 17 increments the value of the variable M by one (step S35), and then, confirms whether the currently set M-th line exceeds the final line (step S36). The final line corresponds to a line from which a linear component has been finally extracted when the data processing device 19 creates the PBF-AM data by the processing procedure illustrated in FIG. 3 described above. If the currently set M-th line does not exceed the final line, the processing returns to the above step S32. If the currently set M-th line exceeds the final line, a series of the processes is ended.

Subsequently, the dummy scanning will be described in detail.

The dummy scanning is beam scanning that is performed to prevent metal to be melted in one line from being affected by heat at the time of performing beam scanning on the next line. Thus, the dummy scanning is performed under a different condition from the beam scanning that is performed to melt the metal powder 32. That is, the electron beam 15 is scanned in a state that does not cause melting of the metal powder 32 in the dummy scanning. Specifically, the focus state of the electron beam 15 is changed or the scanning speed of the electron beam 15 is changed such that the thermal energy to be applied to the metal powder 32 is reduced as compared with that in the case of performing the beam scanning on the M-th line. Regarding the focus state of the electron beam 15, the electron beam 15 is more blurred as compared with the case of performing the beam scanning on the M-th line. Further, regarding the scanning speed of the electron beam 15, the scanning speed of the electron beam 15 is increased as compared with the case of performing the beam scanning on the M-th line.

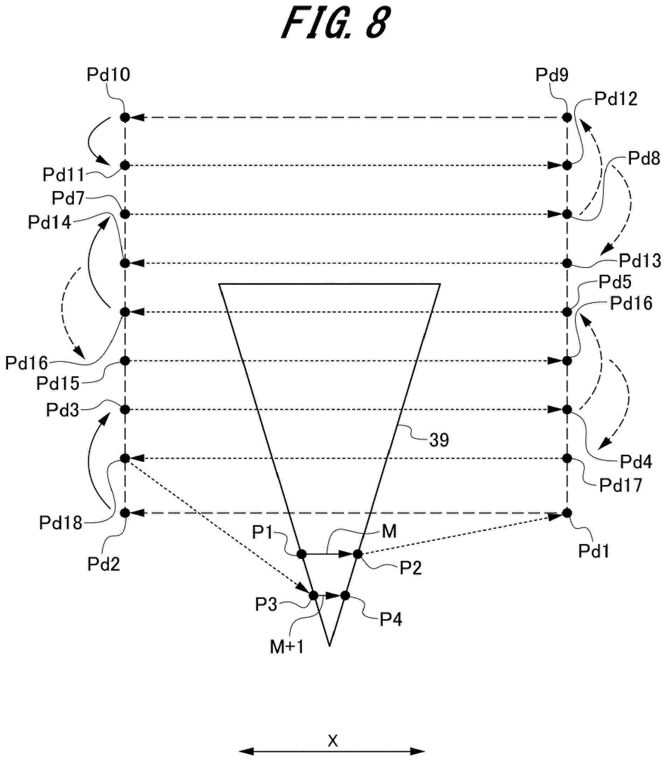

FIG. 8 is a plan view schematically illustrating an example of the dummy scanning path.

As illustrated in FIG. 8, when an M-th line is set as a target of the dummy scanning, the dummy scanning is performed during a period from an end of beam scanning of the M-th line to a start of beam scanning of an (M + 1)th line.

In the example illustrated in FIG. 8, a start position and an end position of the beam scanning on the M-th line are P1 and P2, respectively, and a start position and an end position of the beam scanning on the (M + 1)th line are P3 and P4, respectively. In such a case, the control unit 17 first scans the electron beam 15 in the X direction from the position P1 to the position P2 on the M-th line to melt the metal powder 32. Next, the control unit 17 performs the dummy scanning in the scanning path to be described hereinafter.

First, the control unit 17 moves the irradiation position of the electron beam 15 from the position P2 to a position Pd1. Next, the control unit 17 scans the electron beam 15 in the X direction from the position Pd1 to a position Pd2. Next, the control unit 17 moves the irradiation position of the electron beam 15 from the position Pd2 to a position Pd3. Next, the control unit 17 scans the electron beam 15 in the X direction from the position Pd3 to a position Pd4. Next, the control unit 17 moves the irradiation position of the electron beam 15 from the position Pd4 to a position Pd5. Next, the control unit 17 scans the electron beam 15 in the X direction from the position Pd5 to a position Pd6. Next, the control unit 17 moves the irradiation position of the electron beam 15 from the position Pd6 to a position Pd7. Next, the control unit 17 scans the electron beam 15 in the X direction from the position Pd7 to a position Pd8. Next, the control unit 17 moves the irradiation position of the electron beam 15 from the position Pd8 to a position Pd9.

Next, the control unit 17 scans the electron beam 15 in the X direction from the position Pd9 to a position Pd10. Next, the control unit 17 moves the irradiation position of the electron beam 15 from the position Pd10 to a position Pd11. Next, the control unit 17 scans the electron beam 15 in the X direction from the position Pd11 to a position Pd12. Next, the control unit 17 moves the irradiation position of the electron beam 15 from the position Pd12 to a position Pd13. Next, the control unit 17 scans the electron beam 15 in the X direction from the position Pd13 to a position Pd14. Next, the control unit 17 moves the irradiation position of the electron beam 15 from the position Pd14 to a position Pd15. Next, the control unit 17 scans the electron beam 15 in the X direction from the position Pd15 to a position Pd16. Next, the control unit 17 moves the irradiation position of the electron beam 15 from the position Pd16 to a position Pd17. Next, the control unit 17 scans the electron beam 15 in the X direction from the position Pd17 to a position Pd18. Next, the control unit 17 moves the irradiation position of the electron beam 15 from the position Pd18 to the position P3.

After performing the dummy scanning in the above scanning path, the control unit 17 scans the electron beam 15 in the X direction from the position P3 to the position P4 on the (M + 1)th line to melt the metal powder 32.

As described above, the control unit 17 controls the operations of the respective parts of the beam irradiation device 14 so as to perform the dummy scanning between the end of the beam scanning of the M-th line and the start of the beam scanning of the (M + 1)th line in the first embodiment of the present invention. As a result, a time interval from the start of the beam scanning of the M-th line to the start of the beam scanning of the (M + 1)th line can be secured to be long by the dummy scanning time. Thus, it is possible to prevent the metal to be melted on the M-th line from being affected by heat at the time of scanning the beam on the (M + 1)th line. As a result, a melt pool of the molten metal on the M-th line is less likely to be disturbed. Accordingly, it is possible to suppress generation of a defect in the shaped object 38.

### <Second Embodiment>

Subsequently, a second embodiment of the present invention will be described.

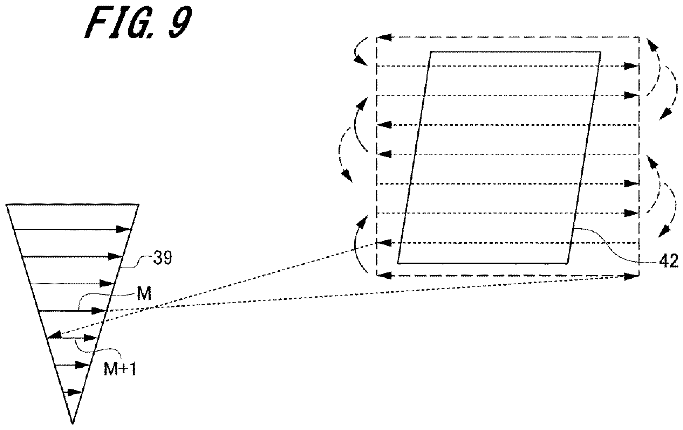

In the second embodiment of the present invention, a scanning path at the time of performing dummy scanning is different from that in the first embodiment described above. Specifically, the beam irradiation device 14 performs the dummy scanning so as to partially overlap the build region 39 as illustrated in FIG. 8 in the first embodiment described above. However, in the second embodiment, the dummy scanning is performed in a separate region 42 that is different from the build region 39 including the M-th line and the (M + 1)th line as illustrated in FIG. 9. The separate region 42 is a region that does not overlap with the build region 39, currently set as a target of beam scanning, in a surface region of a powder layer formed when one layer of the metal powder 32 is spread on the build plate 22. The separate region 42 is preferably a build region where beam scanning is scheduled to be performed after the build region 39, and more preferably a build region where beam scanning is scheduled to be performed next to the build region 39.

Since a region to be subjected to the dummy scanning is set to the separate region 42 that is different from the build region 39 in this manner, it is possible to prevent the build region 39 from being affected by heat generated by the dummy scanning. Since the build region where the beam scanning is scheduled to be performed after the build region 39 is set to the separate region 42, the heat generated by the dummy scanning can be used to heat the separate region 42.

### <Third Embodiment>

Subsequently, a third embodiment of the present invention will be described.

The third embodiment of the present invention is different from the first embodiment described above in terms of a processing procedure when the data processing device 19 creates PBF-AM data and a processing procedure when the control unit 17 controls the electron beam 15 based on the PBF-AM data.

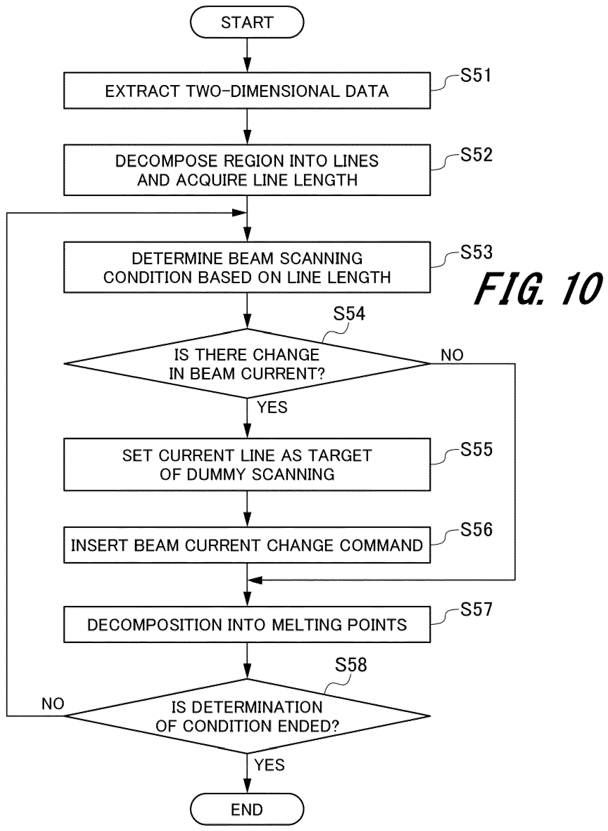

FIG. 10 is a flowchart illustrating a processing procedure when the data processing device 19 creates the PBF-AM data in the third embodiment of the present invention.

First, the data processing device 19 extracts two-dimensional data obtained by slicing three-dimensional CAD data of the shaped object 38 to a constant thickness for each layer (step S51). Next, the data processing device 19 decomposes a build region identified by the two-dimensional data into lines and acquires a length of the line (step S52) .

Next, the data processing device 19 determines a beam scanning condition based on the length of the line acquired in step S52 (step S53).

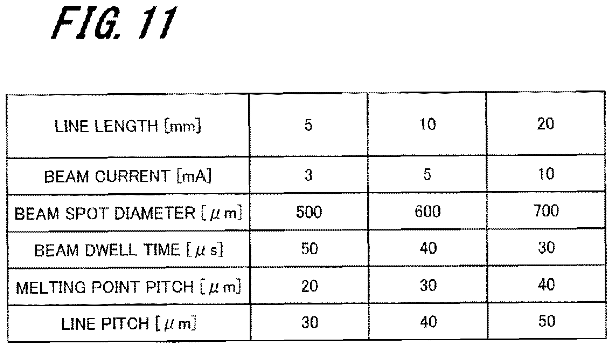

FIG. 11 is a view illustrating an example of table data for determining the beam scanning condition.

As illustrated in FIG. 11, the beam scanning condition includes not only a beam current (mA) of the electron beam 15 but also control parameters such as a beam spot diameter (µm), a beam dwell time (µs), a melting point pitch (µm), and a line pitch (µm). The beam spot diameter is a spot diameter ϕB when the melting point 40 illustrated in FIG. 4 is irradiated with the electron beam 15. The beam dwell time is a time for which a spot of the electron beam 15

dwells per melting point 40 when the melting points 40 illustrated in FIG. 4 are irradiated with the electron beams 15. The melting point pitch is a pitch Mp (see FIG. 4) between two melting points 40 adjacent to each other in the X direction which is the scanning direction of the electron beam 15. The line pitch is a pitch Lp (see FIG. 4) between two lines adjacent to each other in the Y direction.

When the line length acquired in the above step S52 above is 5 mm, the data processing device 19 determines that the beam current is 3 mA, the beam spot diameter is 500 µm, the beam dwell time is 50 µs, the melting point pitch is 20 µm, and the line pitch is 30 µm. Further, when the line length acquired in the above step S52 is 10 mm, the data processing device 19 determines that the beam current is 5 mA, the beam spot diameter is 600 µm, the beam dwell time is 40 µs, the melting point pitch is 30 µm, and the line pitch is 40 µm. Further, when the line length acquired in the above step S52 is 20 mm, it is determined that the beam current is 10 mA, the beam spot diameter is 700 µm, the beam dwell time is 30 µs, the melting point pitch is 40 µm, and the line pitch is 50 µm. Note that the respective parameters of the beam scanning condition may be determined by an interpolation method or the like when the line length is more than 5 mm and less than 10 mm or when the line length is more than 10 mm and less than 20 mm.

Returning to FIG. 10 again, the data processing device 19 determines whether there is a change in the beam current in the beam scanning condition determined in the above step S53 (step S54). Specifically, the data processing device 19 determines YES in step S54 if a beam current to be applied to a current line is different from a beam current that has been applied to a preceding (previous) line, and determines NO in step S54 if not (the same beam current is applied to both the previous and current lines). The processing proceeds to step S55 if YES is determined in step S54, and proceeds to step S57 if NO is determined in step S54.

Next, the data processing device 19 sets the current line as a target of dummy scanning (step S55). When the current line is set as the target of the dummy scanning, drawing information for the dummy scanning is inserted after the current line.

Next, the data processing device 19 inserts a beam current change command (step S56). The beam current change command includes information that specifies a changed beam current.

Next, the data processing device 19 decomposes the current line into a plurality of melting points according to the above beam scanning condition (step S57).

Next, the data processing device 19 confirms whether the determination of the beam scanning condition has been ended for all the lines (step S58). Then, the data processing device 19 determines NO in step S58 if there remains a line for which the determination of the beam scanning condition has not been ended, and determines YES in step S58 if the determination of the beam scanning condition has been ended for all the lines. The processing returns to the above step S53 if NO is determined in step S58, and a series of the processes is ended at that time if YES is determined in step S58.

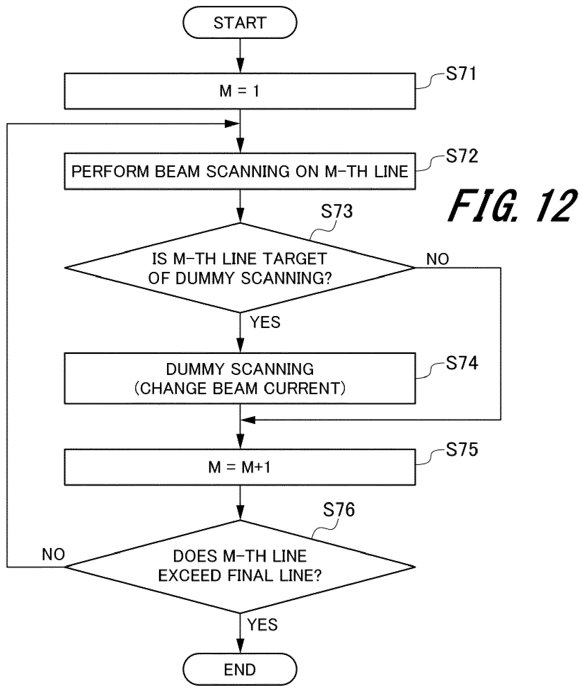

FIG. 12 is a flowchart illustrating the processing procedure when the control unit 17 controls the electron beam 15 based on the PBF-AM data in the third embodiment of the present invention.

First, the control unit 17 sets a value of a variable M to an initial value (M = 1) (step S71), and then, performs beam scanning on an M-th line (step S72).

Next, the control unit 17 confirms whether the M-th line is set as a target of the dummy scanning (step S73). Then, when determining that the M-th line is set as the target of the dummy scanning, the control unit 17 performs the dummy scanning at the time when the beam scanning of the line has ended (step S74). At this time, the control unit 17 gives a control command to the beam irradiation device 14 according to the beam current change command inserted by the data processing device 19 in step S56 of FIG. 10 described above. Further, the beam irradiation device 14 changes a beam current during dummy scanning according to the control command given from the control unit 17. The term "during dummy scanning" refers to a period from a start of the dummy scanning to an end of the dummy scanning. A timing for changing the beam current may be set to any timing as long as a stable state can be obtained with a changed beam current at the time when the dummy scanning has been ended. Further, it is preferable to change the beam current immediately after starting the dummy scanning from the viewpoint of securing a time from the actual change of the beam current to the stabilization with the changed beam current as long as possible.

Next, the control unit 17 increments the value of the variable M by one (step S75), and then, confirms whether the currently set M-th line exceeds the final line (step S36). Then, the processing returns to the above step S72 if the M-th line does not exceed the final line, and a series of the processes is ended if the M-th line exceeds the final line.

In this manner, in the third embodiment of the present invention, when the M-th line is set as the target of the dummy scanning, the dummy scanning is performed at the time when the beam scanning of the line has been ended, and the beam current is changed during the dummy scanning. As a result, an (M + 1)th line can be subjected to beam scanning with a stable beam current.

### <Modification, etc.>

The technical scope of the present invention is not limited to the above-described embodiments, and includes modes added with various changes and improvements within a range in which specific effects, obtained by constituent elements of the invention and combinations thereof, can be derived.

For example, the dummy scanning is performed when the length of the M-th line is shorter than the first threshold or when the time required for the beam scanning of the M-th line is shorter than the second threshold in the above embodiments, but the present invention is not limited thereto, and the dummy scanning may be performed on all the lines of the build region 39. However, the shaped object 38 can be efficiently manufactured if the dummy scanning is performed only when the length of the M-th line is shorter than the first threshold or when the time required for the beam scanning of the M-th line is shorter than the second threshold.

### Description of Symbols

- 10: Three-dimensional powder bed fusion additive manufacturing (PBF-AM) apparatus
- 14: Beam irradiation device
- 15: Electron beam (beam)
- 22: Build plate
- 32: Metal powder (powder material)
- 39: Build region
- 42: Separate region

## Claims

1. A three-dimensional powder bed fusion additive manufacturing apparatus comprising:
a build plate (22) on which a powder material (32) is spread in layers; and
a beam irradiation device (14) which irradiates the powder material (32) spread on the build plate (22) with a beam (15),
wherein the beam irradiation device (14) divides a build region (39) of the powder material (32) spread on the build plate (22) into a plurality of lines and performs beam scanning to melt the powder material (32) in the build region (39) line by line, and performs dummy scanning to scan the beam (15) in a state that does not cause melting of the powder material (32) between an end of beam scanning of an M-th (M is a natural number) line and a start of beam scanning of an (M + 1)th line.

2. The three-dimensional powder bed fusion additive manufacturing apparatus according to claim 1, wherein
the state that does not cause melting of the powder material (32) is at least one of a state in which the beam (15) is more blurred as compared with the beam scanning of the M-th line and a state in which a scanning speed of the beam (15) is increased as compared with the beam scanning of the M-th line.

3. The three-dimensional powder bed fusion additive manufacturing apparatus according to claim 1 or 2, wherein
the beam irradiation device (14) performs the dummy scanning when a length of the M-th line is shorter than a first threshold.

4. The three-dimensional powder bed fusion additive manufacturing apparatus according to claim 3, wherein
the beam irradiation device (14) adjusts a time of the dummy scanning in accordance with a difference between the first threshold and the length of the M-th line.

5. The three-dimensional powder bed fusion additive manufacturing apparatus according to claim 3, wherein
the first threshold is different depending on a beam current.

6. The three-dimensional powder bed fusion additive manufacturing apparatus according to claim 1 or 2, wherein
the beam irradiation device (14) performs the dummy scanning when a time required for the beam scanning of the M-th line is shorter than a second threshold.

7. The three-dimensional powder bed fusion additive manufacturing apparatus according to claim 6, wherein
the beam irradiation device (14) adjusts a time of the dummy scanning in accordance with a difference between the second threshold and the time required for the beam scanning of the M-th line.

8. The three-dimensional powder bed fusion additive manufacturing apparatus according to claim 6, wherein
the second threshold is different depending on a beam current.

9. The three-dimensional powder bed fusion additive manufacturing apparatus according to claim 1 or 2, wherein
the beam irradiation device (14) performs the dummy scanning in a separate region (42) that is different from the build region (39) including the M-th line and the (M + 1)th line.

10. The three-dimensional powder bed fusion additive manufacturing apparatus according to claim 9, wherein
the separate region (42) is a build region where beam scanning is scheduled to be performed after the build region (39) including the M-th line and the (M + 1)th line.

11. The three-dimensional powder bed fusion additive manufacturing apparatus according to claim 1 or 2, wherein
the beam irradiation device (14) changes a beam current during the dummy scanning.

12. A three-dimensional powder bed fusion additive manufacturing method comprising:
spreading a powder material (32) on a build plate (22); and
melting and coagulating the powder material (32) by irradiating the powder material (32) with a beam (15) and dividing a build region (39) corresponding to a cross-sectional shape of a shaped object into a plurality of lines to perform beam scanning,
in the melting and coagulating of the powder material (32), dummy scanning is performed to scan the beam (15) in a state that does not cause melting of the powder material (32) between an end of beam scanning of an M-th (M is a natural number) line and a start of beam scanning of an (M + 1)th line.
